# EUROPÄISCHE PATENTSCHRIFT

(11) **EP 2 625 950 B1**
(45) Veröffentlichungstag und Bekanntmachung des Hinweises auf die Patenterteilung: **21.01.2015**
(21) Anmeldenummer: 13000667.9
(22) Anmeldetag: 08.02.2013
(51) Int. Cl.: A01G 9/24, A01G 13/02

(54) **Hagelschutzvorrichtung für landwirtschaftliche Pflanzungen**
Hail protection device for agricultural crops
Dispositif de protection anti-grêle pour plantations agricoles

(30) Priorität: 10.02.2012 IT BZ20120004
(43) Veröffentlichungstag der Anmeldung: 14.08.2013
(73) Patentinhaber: Anselmi, Ferdinando, 38021 Brez (TN) (IT); Anselmi, Giorgio, 38021 Brez (TN) (IT)
(72) Erfinder: Anselmi, Ferdinando, 38021 Brez (IT); Anselmi, Giorgio, 38021 Brez (IT)
(74) Vertreter: Oberosler, Ludwig

(56) Entgegenhaltungen:
- EP-A1- 1 442 656
- EP-A1- 2 368 421
- FR-A1- 2 883 320
- GB-A- 2 194 271

## Beschreibung

Die Erfindung bezieht sich auf eine Hagelschutzvorrichtung von der Art mit geneigt, horizontal, bzw. vertikal angeordneten Netzen, insbesondere für den Schutz von Obstbaumpflanzungen, bzw. von Rebanlagen in welchen die Pflanzen in zueinander parallelen, eher engen, Reihen angeordnet sind und mit einer Stützstruktur versehen sind welche wesentlich aus vertikalen Pfählen und aus Metalldrähten samt den entsprechenden Verankerungen besteht.

Es sind Hagelschutzvorrichtungen mit geneigt angeordneten Netzen bekannt bei welchen die einzelnen Netze, entlang einer der Längswebkanten, an einem Metalldraht gesichert sind welcher über die oberen Enden der vertikalen Pfähle der Stützstruktur verlaufen, während die gegenüberliegende Webkante des Netzes, bei ausgespanntem Netz und somit in Schutzstellung, an einem Metalldraht gesichert ist welcher im Bereich der Mittellinie zwischen den Pflanzreihen, bzw. zwischen den vertikalen Pfählen zweier Pflanzreihen, in einer tiefer liegenden Position, in Bezug auf die an den oberen Pfahlenden angeordneten Drähten, vorgesehen ist. Diese besagten Netze müssen entlang der tiefer liegenden Längskante ausgehängt werden um im Bereich des höher gelegenen Drahtes zusammengebündelt und zurückgehalten zu werden.

Aus der EP 1442656 ist eine Hagelschutzvorrichtung mit wesentlich horizontal angeordneten Netzen bekannt bei welcher die Spannung in Querrichtung der Netze durch eine Betätigungsleine erreicht wird welche in Längsrichtung über Führungs- und Umlenkelemente läuft, an welcher mehrere quer angeordnete dünnere Spannleinen befestigt sind welche an den Führungs- und Umlenkelementen, die an der Stützstruktur vorgesehen sind, durch Ösen laufen um ca. 90°, in Bezug zur Betätigungsleine, umgelenkt zu werden.
Die Enden dieser Zugleinen sind an den freien Längswebkanten der Netze eingehängt oder befestigt um, durch Ziehen der Betätigungsleine in eine Richtung, das Ausspannen der Netze in ebener Position zu erreichen, während durch Betätigung in die Gegenrichtung, bzw. durch frei lassen der besagten Betätigungsleine, das Neigen der Netze in Richtung Boden und die Entleerung eventueller Hagelkörner erreicht wird.

Die Praxis hat gezeigt, dass dieses System, um effizient zu sein, eine Netzbreite fordert welche größer ist als die bestehende Distanz zwischen einer Pflanzreihe und der Mittellinie zwischen den Pflanzreihen um dadurch, bei horizontal angeordneten Netzen, eine Überlappung im Bereich der beiden entsprechenden Webkanten der Netze zu erhalten, um dadurch, auch bei Belastungen durch Wind und/oder Hagel, den vollständigen Schutz der abgedeckten Pflanzen zu sichern. Insbesondere aber bringt die Überlappung der Netze eine verminderte Bescheinung durch die Sonne, welche für den Reifeprozess und die organoleptische und ästhetische Qualität der Früchte wichtig ist, mit sich.

Alle diese bekannten Hagelschutzvorrichtungen werden so bedient, dass die Netze praktisch über den gesamten Sommer und Herbst in Schutzstellung gehalten werden weil das Zusammenbündeln der Netze und deren Festmachen am Draht welcher über die oberen Pfahlenden verläuft, als auch das Freimachen der Netze und ihr Verspannen in Schutzstellung, eher arbeitsaufwändig ist. Dies bringt mit sich, dass die Besonnung der Früchte und der Pflanzen während des Sommers und während Großteil des Herbstes nicht optimal ist.

Aus dem Patentansuchen No.: BZ2007A000036 ist ein Ausfahr- und Einfahrsystem für Hagelnetze bekannt welches mit Netzen arbeitet welche eine Länge aufweisen die dem Abstand zwischen den Stützpfählen in Längsrichtung der Pflanzreihen entspricht, diese Netze sind in Längsrichtung, nach Art von Vorhängen, an horizontal verspannten Metalldrähten mittels eines Systems von Leinen welche durch Ösen oder über Stützrollen geführt werden, verschiebbar. Dieses System hat kaum Anwendung gefunden weil der Hagel nicht progressiv und wirkungsvoll in Richtung Boden abgeleitet wird, wodurch Ansammlungen entstehen welche die Netze stark belasten, weiters treten bei diesem System öfters Hemmungen auf.

Die Erfindung stellt sich die Aufgabe eine Hagelschutzvorrichtung der eingangs genannten Art zu schaffen welche geeignet ist die Besonnung der Pflanzen und der Früchte zu optimieren, welche das bequeme und schnelle Ausbreiten der Netze in Schutzstellung und das Zusammenraffen in gebündelter Stellung ermöglicht und welche das Entladen des Hagels in Richtung Boden begünstigt, ohne die Struktur der Vorrichtung übertrieben zu belasten.
Weiters stellt sich die Erfindung die Aufgabe die Hagelschutzvorrichtung mit dem selben System für die Ausbreitung der Netze in Schutzstellung und für das Raffen der Netze zu einem Bündel auch für die Anwendung an Rebanlagen mit vertikal angeordneten Netzen zu gestalten.

Zur Lösung dieser Aufgabe schlägt die Erfindung vor, dass die Netze mit der Längswebkante im Bereich der Mittellinie, zwischen den parallelen benachbarten Pflanzreihen, angeordnet sind und dabei leicht gegen den Boden angewinkelt sind, ohne dass sich dabei die Webkanten der benachbarten Netze im Bereich der Mittellinie zwischen den Baumreihen überlappen. Um dies zu erreichen ist jedes der Netze mit einer der Längswebkanten höher liegend am Metalldraht welcher über die oberen Pfahlenden jeder Reihe verspannt ist, befestigt, während die zweite (tiefer liegende) Webkante jedes Netzes durch mehrere dünnere Spannleinen, welche sich von einer einzigen, an den oberen Enden der Pfähle der benachbarten Pflanzreihe in Längsrichtung ziehbaren, Spannleine verzweigen, ausgespannt werden kann. Jede dieser dünneren Spannleinen wird, in wesentlich vertikaler Richtung, nach unten zu einer Linie abgelenkt welche in einem bestimmten Abstand zu den oberen Pfahlenden tieferliegend verläuft, um von dort in geneigter Richtung sich zur (tiefer liegenden) Längswebkante des Netzes zu erstrecken. Um das Netz zu ein Bündel zusammenzuraffen, so dass es nicht die Besonnung beeinträchtigt, schlägt die Erfindung den Einsatz einer zweiten Betätigungsleine vor welche verschiebbar im Bereich des feststehenden verspannten Drahtes am oberen Ende der vertikalen Pfähle an welchem eine der Längswebkanten des Netzes befestigt ist, geführt wird; mittels dieser Leine können mehrere schlingenförmig angeordnete dünnere Leinen betätigt werden, diese umschlingen das Netz um es progressiv zu bündeln und es als Bündel, am Draht welcher als Verankerung für eine der Längswebkanten des selben Netzes dient, zurückzuhalten.

Das von der Erfindung vorgeschlagene System sieht also für jedes Netz eine bewegliche Spannleine vor welche an den oberen Enden der parallelen und beabstandeten Pfähle der zu schützenden Pflanzreihe geführt wird und mit einer Reihe dünnerer Spannleinen versehen ist um das Netz auszubreiten und in Schutzstellung zu bringen und sieht weiters eine bewegliche Betätigungsleine vor welche an den oberen Enden der Pfähle der zu schützenden Pflanzreihe geführt ist und mit einer Reihe von dünneren schlingenförmig angeordneten Leinen versehen ist um das Netz zu einem Bündel nahe am Spanndraht welcher als Verankerung für eine der Längswebkanten des selben Netzes dient, raffen zu können. Die dünneren Spannleinen zum Ausbreiten des Netzes in Schutzstellung sind in einen Bereich unterhalb des oberen Endes der Pfähle umgelenkt um so zu erreichen, dass das Netz in Schutzstellung eine leicht gegen den Boden geneigte Stellung einnimmt um den Hagel progressiv in einem Mittelbereich, zwischen den Pflanzreihen, in Richtung Boden zu entleeren. Das erfindungsgemäße Raffen des Netzes zu einem Bündel kann auch an anderen bekannten Systemen, z.B. mit wesentlich horizontal angeordneten Netzen, eingesetzt werden.

Das erfindungsgemäße System ermöglicht den schnellen Wechsel des Betriebszustandes der einzelnen Netze, ohne die Pflanzreihen abschreiten zu müssen und ohne Einsatz von Werkzeugen oder Maschinen.

Erfindungsgemäß können die dünneren schlingenartigen Leinen zur Raffung der Netze zu einem Bündel, mit beiden Enden an der Betätigungsleine befestigt sein oder mit einem der Enden an der besagten Leine befestigt sein, während das zweite Ende an der Struktur, z.B. am metallischen Draht befestigt ist welcher über die oberen Enden der Pfähle verspannt ist. Diese dünneren Leinen zum Raffen des Netzes können weiters mit einem Ende an der Betätigungsleine befestigt sein, während das zweite Ende an der (tiefer liegenden) Längswebkante befestigt ist, in diesem Fall ist diese dünnere Leine nicht schlingenförmig angeordnet und verläuft oberhalb oder unterhalb des Netzes an welchem sie mittels Ringe oder Schlaufen geführt wird welche in Querrichtung am Netz vorgesehen sind. In diesem letzten Fall ergibt sich die Möglichkeit dünne Spannleinen zu verwenden welche, nach dem Befestigungspunkt an der Webkante des Netzes sich weitererstrecken um mit dem anderen Ende an der Betätigungsleine für des Raffen des Netzes befestigt zu werden.

Das selbe oben beschriebene System für das Ausziehen der Netze in ausgebreiteter Schutzstellung, bzw. für das Raffen der Netze zu einem Bündel ist erfindungsgemäß auch an wesentlich vertikal vorgesehenen Netzen z.B. an Rebanlagen möglich. Dabei ist es vorteilhaft die Netze in Bodennähe zu bündeln, ohne eine Bündelung oberhalb der Pflanzen auszuschließen. Die beidseitig an den Pflanzreihen vorgesehenen vertikalen Netze dienen in hochgezogener Schutzstellung zugleich als Vogelschutz.

Die Erfindung schließt nicht aus, dass die dünneren Spannleinen für das Ausbreiten der Netze mit Gummibändern oder Federn versehen sind um dadurch einerseits, entlang der gesamten Längserstreckung des Netzes, eine gleichmäßige Verspannung zu sichern und anderseits um, an den Stellen mit höherer Belastung, eine elastische Anpassung zu ermöglichen wodurch das Entleeren des eventuellen abgelagerten Hagels begünstigt wird.

Weiters bietet sich das erfindungsgemäße System an, automatisiert zu werden indem vorgesehen wird, dass die Leinen mittels motorgetriebener Winden einzeln oder zentralisiert betätigt werden.

Natürlich können die Hagelnetze durch Regenschutzplanen ersetzt werden, wobei die Funktionsabläufe unverändert beibehalten werden.

Die Erfindung wird nachfolgend anhand zweier, in den beigelegten Zeichnungen schematisch dargestellter, vorzuziehender Ausführungsbeispiele einer erfindungsgemäßen Hagelschutzvorrichtung für landwirtschaftliche Pflanzungen näher erklärt, dabei erfüllen die Zeichnungen rein erklärenden, nicht begrenzenden, Zweck.

Die Fig. 1 zeigt in perspektivischer Darstellung einen Teil der erfindungsgemäßen Hagelschutzvorrichtung, begrenzt auf nur zwei Stützpfähle zweier benachbarter Pflanzreihen, mit nur einem Netz in Schutzstellung, ohne Darstellung der Pflanzreihen und der feststehenden Drähte der Stützstruktur, es wird nur ein Netz mit den entsprechenden Betätigungsleinen und mit den dünneren Spannleinen dargestellt um die Zeichnung einfacher und verständlicher zu gestalten.

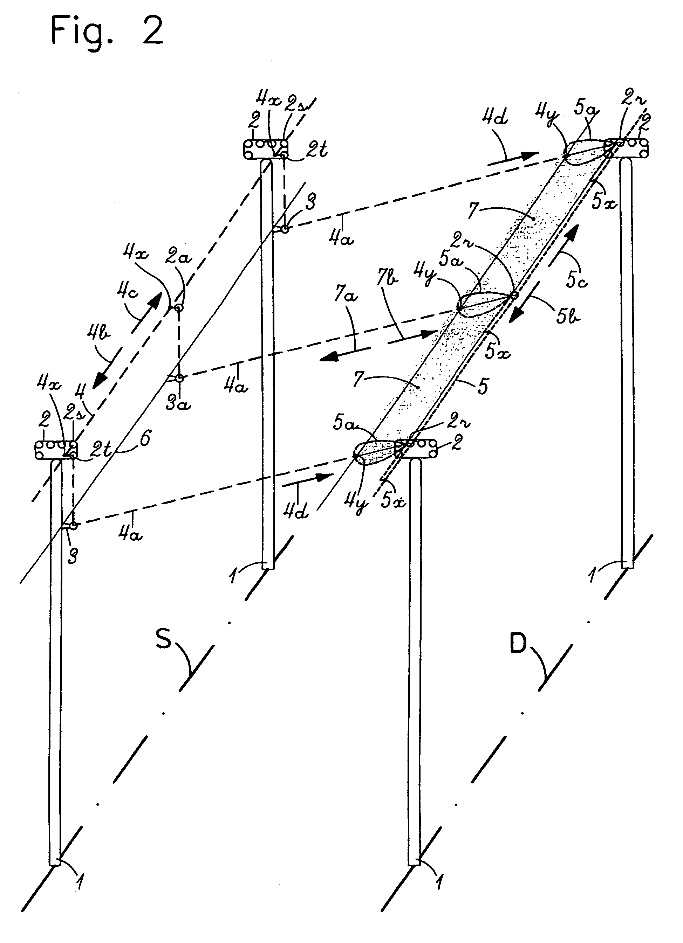

Die Fig. 2 zeigt in perspektivischer Darstellung die selbe, in Fig. 1 gezeigte, Hagelschutzvorrichtung mit zu einem Bündel gerafftem Netz.

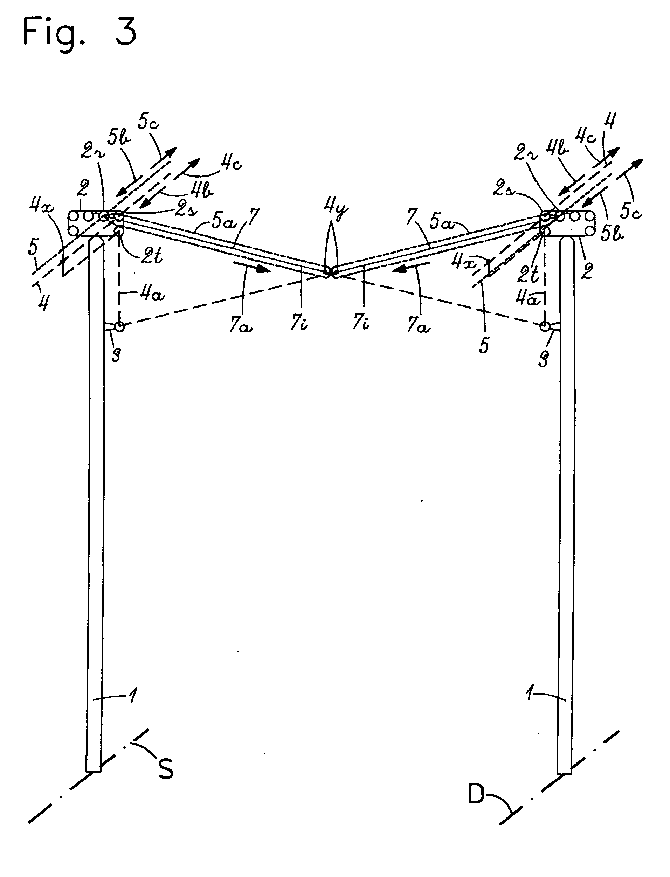

Die Fig. 3 zeigt in Vorderansicht die selbe, in den Fig. 1 und 2 dargestellte, Hagelschutzvorrichtung mit zwei Netzen in Schutzstellung.

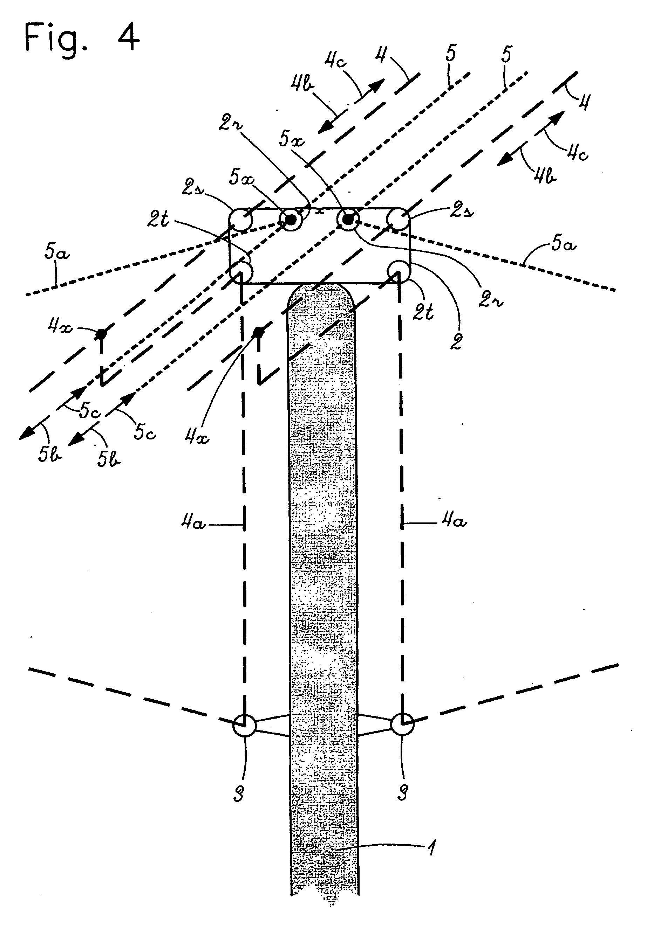

Die Fig. 4 zeigt schematisch in perspektivischer Darstellung die Halterung mit mehreren Ösen für die Betätigungsleinen mit Umlenkung der dünneren Spannleinen mit mehreren Ösen mit, in Bezug zur Halterung, tiefer liegender Position.

Die Fig. 5 zeigt in perspektivischer Darstellung eine erfindungsgemäße Hagelschutzvorrichtung an einer Rebanlage; das Netz ist nur an einer Seite der Pflanzreihe in gebündeltem Zustand dargestellt.

Die Fig. 6 zeigt in perspektivischer Darstellung die in Fig. 5 gezeigte Hagelschutzvorrichtung mit dem Netz in teilweise hochgezogenem Zustand.

Die Reihen S, D einer Baumanlage für die Produktion von Früchten sind mit einer bekannten Stützstruktur, bestehend wesentlich aus vertikalen Pfählen 1, aus horizontal verspannten Metalldrähten und aus Verankerungs- und Verwindungsmetalldrähten; zwischen diesen zueinander parallelen Reihen S, D ist eine freie Durchfahrt für die Maschinen zur Durchführung der Behandlungs-, Beschneidungs-, Binde- und Erntearbeiten, vorgesehen.

Im Falle einer Hagelschutzanlage ist es bekannt, dass die vertikalen Pfähle 1 höher sind als die Pflanzen und dass die oberen Enden dieser Pfähle 1 durch Metalldrähte verspannt sind an welchen die Hagelschutznetze 7 befestigt sind.

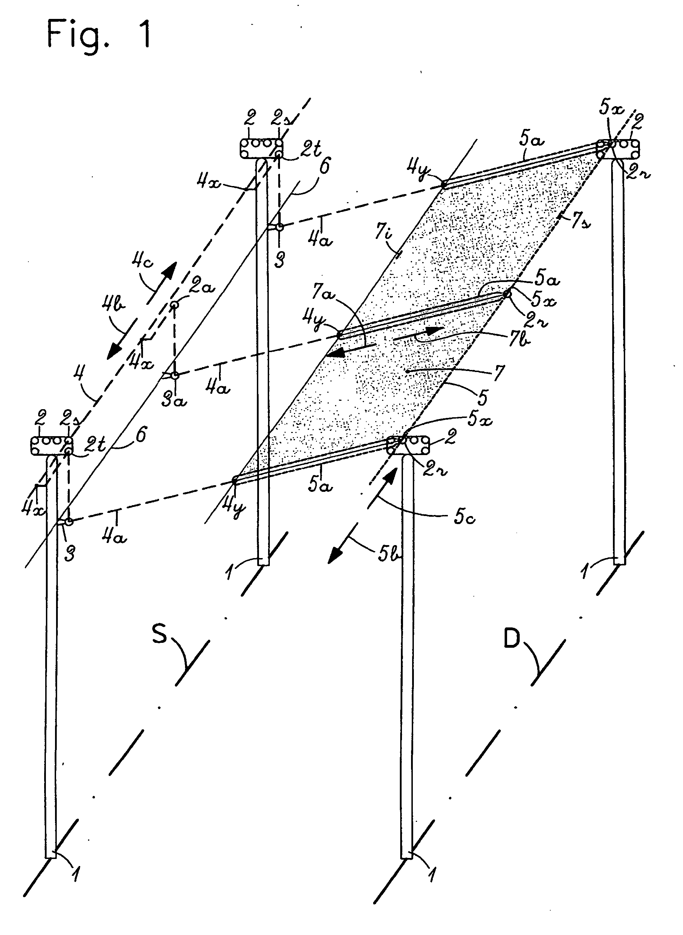

Die erfindungsgemäße Hagelschutzvorrichtung nutzt die selbe Stützstruktur der bekannten Hagelschutzvorrichtungen. Jedes der Hagelnetze 7 ist entlang einer der beiden Längswebkanten 7s am (nicht dargestellten) Metalldraht befestigt welcher sich über die oberen Enden der Stützpfähle 1 der Pflanzreihe D erstreckt, während an der gegenüberliegenden parallelen Längswebkante 7i des selben Netzes 7, die Enden der dünneren, an der Betätigungs-Spannleine 4 befestigten 4x Spannleinen 4a, zueinander beabstandet, befestigt 4y sind. Diese Spannleine 4 ist in Längsrichtung beweglich 4b, 4c, mittels Ösen 2s oder mittels Rollen welche an Haltern 2 an den oberen Enden der Pfähle 1 der, zur Pflanzreihe D parallelen, Pflanzreihe S vorgesehen sind, geführt. Die Betätigungs-Spannleine 4 läuft durch die obere Öse 2s der Halter 2 während durch die entsprechende untere Öse 2t des selben Halters 2, die dünnere Spannleine 4a läuft. In den Bereichen zwischen zwei Pfählen 1 der selben Pflanzreihe können Ösen 2a für die Führung weiterer, an der Betätigungs-Spannleine 4a befestigte 4x, dünnere Spannleinen 4a vorgesehen sein welche an einem verspannten Metalldraht der (nicht dargestellten) Stützstruktur befestigt sind. Die selben dünneren Spannleinen 4a laufen durch Ösen 3 welche an den einzelnen Pfählen 1, in Bezug zur Position der Halter 2 tiefer liegend, vorgesehen sind, bzw. durch Ösen 3a welche an einem Metalldraht 6 vorgesehen sind welcher eigens dafür gespannt ist oder Teil der Stützstruktur ist. Durch Ziehen 4b der Betätigungs-Spannleine 4 werden alle einzelnen dünneren Spannleinen 4a gezogen um das Netz 7 in einer, leicht zum Boden geneigten, Position auszubreiten. In dieser ausgebreiteten Position nimmt das Netz 7 die Schutzstellung ein, die Betätigungs-Spannleine 4 muss unter Spannung gehalten werden damit das Gewicht des Hagels und/oder damit die Belastung der Windstöße, das Netz 7 nicht aus dieser ausgebreiteten Position verstellen können. Wegen der geneigten Position des Netzes 7 tendiert der Hagel progressiv in Richtung zur tiefer liegenden Längswebkante 7i des Netzes 7 zu gleiten und über diese hinweg, im mittleren Durchfahrbereich für die Maschinen, ohne Schaden zu verursachen, auf den Boden zu fallen; dabei wird verhindert, dass der Hagel auf den Netzen gesammelt wird und dass diese, sowie die gesamte Stützstruktur zu hohen Belastungen, bzw. Beschädigungen, ausgesetzt wird. Um das Netz 7 zu einem Bündel nahe oder anliegend am (nicht dargestellten) Metalldraht, welcher an den oberen Enden der Pfähle 1 der Pflanzreihe D verspannt ist, zusammen zu raffen 7a, muss die Betätigungsleine 4 welche durch die Ösen 2s der Halter 2 an den Pfählen 1 der Pflanzreihe S läuft freigelassen werden um in Richtung 4c laufen zu können, anschließend muss die Betätigungsleine 5 gezogen 5b werden welche durch die Ösen 2r der Halter 2 an den oberen Enden der Pfähle 1 der Pflanzreihe D läuft, dabei ist die Längswebkante 2s des Netzes 7 in diesem Bereich am (nicht dargestellten) Metalldraht befestigt. An der besagten Betätigungsleine 5 sind mehrere dünnere, schlingenförmig verlaufende Leinen 5a befestigt 5x welche zueinander beabstandet sind und das Netz 7 umschlingen. Bei ausgebreitetem, in Schutzstellung gebrachtem, Netz 7 (Fig. 1) sind die besagten dünneren schlingenförmigen Leinen 5a so ausgezogen, dass sie das Ausbreiten 7a des Netzes nicht behindern. Durch Ziehen 5b der Betätigungsleinen 5 werden die einzelnen dünneren schlingenförmigen Leinen 5a, welche mit beiden Enden am Kabel 5 befestigt sind, so gezogen dass sie durch die Ösen 2r gleiten welche an den Haltern 2 vorgesehen sind, bzw. durch die Ösen 2u gleiten welche an einem (nicht dargestellten) Draht an den oberen Enden der Pfähle der Stützstruktur befestigt sind. Die von den dünneren Leinen 5a gebildeten Schlingen werden, durch das Ziehen durch die Ösen 2r, 2s hindurch, verengt um das Netz 7 durch Verschieben in eine Position nahe am (nicht dargestellten) Metalldraht an den oberen Enden der Pfähle 1 der Pflanzreihe D, zu einem Bündel zu raffen. Während diesem Raffvorgang am Netz 7 ziehen 4d die dünneren schlingenförmigen Leinen 5a auch die dünneren Spannleinen 4a welche ihrerseits die Betätigungs-Spannleine 4 ziehen 4c welche, während dem Raffvorgang 7b des Netzes 7 frei in Längsrichtung 4c laufen kann.

Erfindungsgemäß können die dünneren Spannleinen 4a mit Gummibänder ausgetauscht werden, aus einer dünnen Leine und einem elastischen Abschnitt bestehen oder mit einer Zugfeder ausgestattet sein.
Die an den Haltern 2 vorgesehenen Ösen, bzw. die Ösen 3, 3a, 2a, 2r, 2s, 2t, 2u, können durch bekannte Führungs- und/oder Umlenkrollen ersetzt werden welche mit Bügel versehen sind um das Herausspringen der Leinen 4, 5, bzw. der dünneren Leinen 4a, 5a zu verhindern.

Natürlich erfolgt während des Ausbreitens 7a des Netzes 7 in Schutzstellung auch das Ausziehen der einzelnen dünneren Spannleinen 4a zusammen mit dem Netz 7, weswegen die entsprechende Betätigungsleine 5 während diesem Arbeitsvorgang frei sein muss um in Längsrichtung 5c laufen zu können.

Die Betätigungsleinen 4, 5 einer Hagelschutzvorrichtung können einzeln von Hand oder mittels motorisierter Winden betätigt werden, ohne die zentralisierte Betätigung oder die Betätigung von Pflanzreihengruppen auszuschließen; die besagten Winden können derart konzipiert sein dass, während die Leine 4 aufgewickelt wird, der entsprechende Leine 5 von der selben Seiltrommel oder von einer Zwillingstrommel abgewickelt wird. Die Steuerung der Winden zwecks Ausbreitung der Netze 7 in Schutzstellung, kann mittels Fernsteuerung oder mittels geeigneter Sensoren erfolgen welche z.B. Regen und/oder Wind wahrnehmen.

Insbesondere das Raffen 7b des Netzes 7 zu einem Bündel mittels der schlingenförmigen dünneren Leinen 5a welche an der Betätigungsleine 5 befestigt 5x sind, ist wesentlich auf drei unterschiedliche Arten möglich:
- indem beide Enden der besagten dünneren Leinen 5a an der Betätigungsleine 5 befestigt 5x sind,
- indem nur ein Ende der besagten dünneren Leine 5a an der Betätigungsleine 5 befestigt 5x ist, während das zweite Ende an der Stützstruktur der Anlage, z.B. an den Haltern 2, an den oberen Enden der Pfähle oder an einem ortsfesten Metalldraht in der Nähe der Halter 2, befestigt ist,
- indem nur ein Ende der dünneren Leinen 5a an der Betätigungsleine 5 befestigt 5x ist, während das zweite Ende an der Webkante 7i des Netzes 7 befestigt ist; in diesem Fall sind die dünneren Leinen nicht schlingenförmig um das Netz 7 verlegt sondern verlaufen unterhalb oder oberhalb des Netzes 7, wobei sie gleitend durch, unter sich beabstandete, Ringe oder Schlaufen an diesem Netz, gemäß einer quer zur Längserstreckung des Netzes 7 verlaufenden Linie, gesichert sind.

Die Erfindung schließt nicht aus dass, im Falle von nicht schlingenförmig verlaufenden dünneren Leinen 5a, diese mit den entsprechenden dünneren Spannleinen 4a eine durchgehende einzige Leine bilden welche mit einem Ende an der Spannleine 4 befestigt 4x ist, während das andere Ende an der Betätigungsleine 5 befestigt 5x ist, wobei die Leine in einem mittleren Bereich an der Längskante 7i des Netzes 7 befestigt ist.

Erfindungsgemäß kann die Führung der dünneren Spannleinen 4a und/oder der Leinen 5a zum Raffen des Netzes 7 zu einem Bündel durch die selben Ösen 2s, 2r oder Rollen erfolgen welche für die Führung der Betätigungsleinen 4, 5 vorgesehen sind oder durch spezifische Ösen 2t oder Rollen erfolgen. Erfindungsgemäß kann das Ausbreiten und das Raffen des Netzes 7 auch mittels einer einzigen Betätigungsleine erfolgen, z.B. indem an der Betätigungsleine 4 selbst, außer den dünneren Spannleinen 4a auch die dünneren Leinen 5a für das Raffen des Netzes 7 befestigt sind, in diesem Fall wirken die dünneren Spannleinen 4a auf das Netz 7 der Pflanzreihe D, während die dünneren Leinen 5a zum Raffen auf das Netz 7 der Pflanzreihe S wirken, natürlich laufen die verschiedenen dünneren Leinen 4a, 5a durch Ösen oder über Rollen welche entsprechend angeordnet sind.

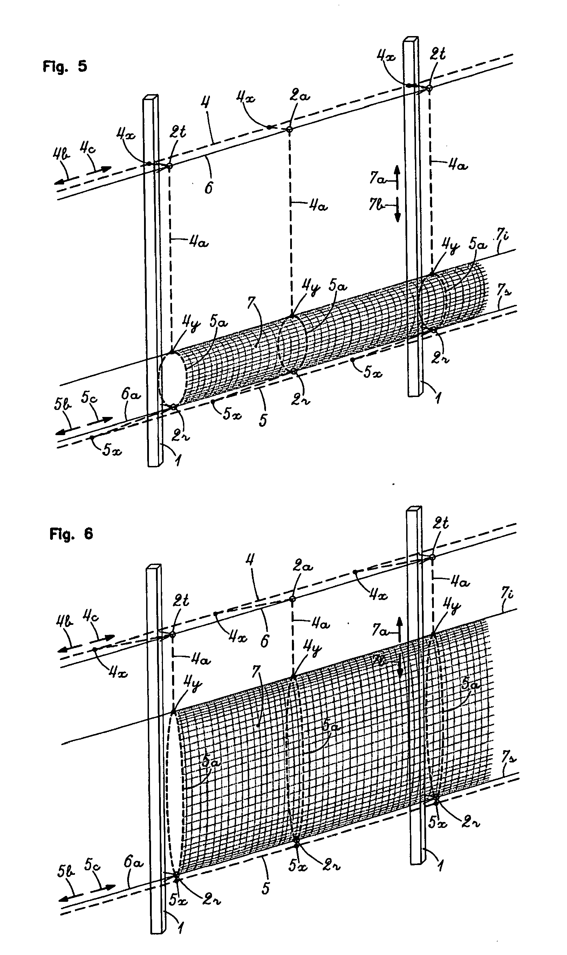

Im Falle vertikaler Netze, z.B. an Rebanlagen (Fig. 5, 6), sind die Betätigungsleinen 4, 5 vertikal übereinander in den entsprechenden Ösen 2r in Bodennähe und in den entsprechenden Ösen 2t, 2a im Bereich der oberen Enden der Pfähle 1 geführt. Es ist vorteilhaft die Bündelung der Netze 7 in Bodennähe vorzusehen und somit die Betätigungsleine 5 mit ihren dünnen schlingenförmigen Leinen 5a durch die tiefliegend angeordneten Ösen 2r zu führen. Die Betätigungs-Spannleine 4 mit ihren dünneren Spannleinen 4a hingegen sind durch die Ösen 2t, 2a geführt. Die Ösen2t, 2a, bzw. 2r, können mittels entsprechender Halter an den Pfählen 1 direkt oder an davon abstehenden längeren Haltern vorgesehen sein.

## Patentansprüche

1. Hagelschutzvorrichtung für landwirtschaftliche Planzungen von der Art mit Netzen (7), deren eine Längswebkante (7s) an einem Metalldraht welcher an den oberen Enden der einzelnen Stützpfähle (1) einer Pflanzreihe (D) verspannt ist, befestigt ist und deren zweite Längskante (7i) der Netze (7), mittels einer Reihe von dünneren Spannleinen (4a) ausgespannten wird, wobei diese an einer einzigen Betätigungs-Spannleine (4) befestigt (4x) sind, welche in Längsrichtung beweglich (5b, 5c) an den oberen Enden der Stützpfähle (1) der benachbarten Pflanzreihe (S) geführt ist, **dadurch gekennzeichnet, dass** die besagten dünneren Spannleinen (4a) von der Längsbewegung (5b, 5c) der Betätigungs-Spannleinen (4) mittels Ösen (2t) oder Rollen welche an den oberen Enden der einzelnen Stützpfähle (1) vorgesehen sind und mittels Ösen (2a) oder Rollen welche an einem Metalldraht der Stützstruktur am oberen Ende der Pfähle (1) vorgesehen sind, vertikal nach unten abgelenkt sind, um anschließend mittels Ösen (3) oder Rollen welche in tiefer liegender Position an den selben Pfählen (1) vorgesehen sind, bzw. mittels Ösen (3a) oder Rollen in, vertikal den obgenannten Ösen (2a) oder Rollen entsprechender, tiefer liegender Position, an einem horizontal verspannten Metalldraht (6) befestigt sind, abgelenkt zu werden, um mit einem der Enden an der Längswebkante (7i) der jeweiligen Netze (7) befestigt (4y) zu werden und dass jedes der Netze (7), im Bereich der oberen Enden der Stützpfähle (1), mittels einer Betätigungsleine (5) zu einem Bündel raffbar ist, wobei diese Leine durch Ösen (2r) oder auf Rollen welche an den oberen Enden der Pfähle (1) gehaltert (2) sind, beweglich (5b, 5c) geführt ist und entlang seiner Längserstreckung eine Reihe von dünneren schlingenförmigen Leinen (5a) aufweist welche das Netz (7) umschlingen.

2. Hagelschutzvorrichtung für landwirtschaftliche Pflanzungen gemäß Anspruch 1, **dadurch gekennzeichnet, dass** durch die Ausbreitung (7a) der Netze (7) mittels der dünneren Spannleinen (4a) und durch das Raffen (7b) der Netze mittels der dünneren Leinen (5a) eine einzige Betätigungsleine (4) vorgesehen ist an welcher, sei es die dünneren Spannleinen (5a) als auch die dünneren Leinen (5a) für das Raffen des Netzes (7) befestigt sind, wobei die dünneren Spannleinen (4a) auf die Netze einer Pflanzreihe (D) wirken während die dünneren Leinen (5a) für das Raffen, auf das Netz der benachbarten Pflanzreihe wirken.

3. Hagelschutzvorrichtung gemäß Anspruch 1, **dadurch gekennzeichnet dass** die dünneren Leinen (5a) zum Raffen der Netze (7) schlingenförmig sind und das Netz in Querrichtung umfassen, wobei beide Enden der Leine an der beweglichen Betätigungsleine (5) befestigt sind oder ein Ende des Kabels an der besagten Betätigungsleine (5) und das anderen Ende an der Struktur der Vorrichtung im Bereich nahe an der, an dieser Struktur befestigten, Webkante (7s) des Netzes, befestigt ist.

4. Hagelschutzvorrichtung gemäß Anspruch 1, **dadurch gekennzeichnet, dass** die dünneren Leinen (5a) für das Raffen (7b) des Netzes (7) sich unterhalb oder oberhalb des Netzes (7) quer zu diesem erstrecken, wobei jeweils ein Ende dieser Leinen an der Betätigungsleine (5) befestigt ist, während das jeweilige entgegengesetzte Ende an der nicht befestigten Webkante (7i) des Netzes befestigt ist und dabei durch, unter sich beabstandet, am Netz (7) befestigte Ringe oder Schlaufen, geführt wird.

5. Hagelschutzvorrichtung gemäß Anspruch 1, **dadurch gekennzeichnet, dass** das System des Raffens der einzelnen Netze (7) zu einem Bündel mittels beweglich (5b, 5c) an dem oberen Enden der Pfähle (1) der Pflanzreihen (D, S) geführter Betätigungsleine (5) welcher mit dünneren, die jeweiligen Netze (7) umschlingende oder an den jeweiligen nicht befestigten Webkanten (7i) befestigte Leinen (5a) ausgestattet ist, auch an Vorrichtungen mit horizontal verspannten Netzen anwendbar ist.

6. Hagelschutzvorrichtung gemäß Anspruch 1, **dadurch gekennzeichnet, dass** die Netze (7) wesentlich vertikal an beiden Längsseiten der jeweiligen Pflanzreihe vorgesehen sind, dass durch jeweils eine Betätigungsleine (5) mit einer Reihe von schlingenförmig, das jeweilige Netz umgreifende, dünnere Leinen (5a) welche durch bodennah vorgesehene Ösen (2r) geführt sind, das Netz zu einem Bündel gerafft werden kann und dass durch eine wesentlich vertikal darüber angeordnete Betätigungs-Spannleine (4) mit einer Reihe von dünneren Spannleinen (4a) das selbe Netz in eine ausgespannte vertikale Schutzposition gebracht werden kann.

## Claims

1. A hail protection device for agricultural plantations of the type comprising nets (7), of which one longitudinal selvedge (7s) is attached to a metal wire which is tensioned along the upper ends of the individual support posts (1) of a planting row (D), and the second longitudinal edge (7i) of the nets (7) is stretched out by means of a row of thinner tension cords (4a), wherein these are attached (4x) to a single actuating tension cord (4) which is guided along the upper ends of the support posts (1) of the adjacent planting row (S) in such a way as to be movable (5b, 5c) in the longitudinal direction, **characterized in that** said thinner tension cords (4a) are deflected vertically upwards by the longitudinal movement (5b, 5c) of the actuating tension cords (4) by means of eyelets (2t) or rollers which are provided at the upper ends of the individual support posts (1) and by means of eyelets (2a) or rollers which are provided on a metal wire of the support structure at the upper end of the posts (1), in order then to be deflected by means of eyelets (3) or rollers which are provided at a lower position on the same posts (1) and by means of eyelets (3a) or rollers at a lower position, corresponding vertically to the abovementioned eyelets (2a) or rollers, on a horizontally tensioned metal wire (6) in order to be attached (4y) by one of the ends to the longitudinal selvedge (7i) of the respective nets (7), and **in that** each of the nets (7), in the region of the upper ends of the support posts (1), can be gathered into a bundle by means of an actuating cord (5), wherein this cord is guided in a movable manner (5b, 5c) through eyelets (2r) or on rollers which are secured (2) to the upper ends of the posts (1) and has along its longitudinal extension a row of thinner, loop-shaped cords (5a) which loop around the net (7).

2. The hail protection device for agricultural plantations according to claim 1, **characterized in that**, due to the stretching-out (7a) of the nets (7) by means of the thinner tension cords (4a) and due to the gathering (7b) of the nets by means of the thinner cords (5a), a single actuating cord (4) is provided to which both the thinner tension cords (5a) and the thinner cords (5a) for gathering the net (7) are attached, wherein the thinner tension cords (4a) act on the nets of one planting row (D) while the thinner cords (5a) for gathering purposes act on the net of the adjacent planting row.

3. The hail protection device according to claim 1, **characterized in that** the thinner cords (5a) for gathering the nets (7) are loop-shaped and encircle the net in the transverse direction, wherein both ends of the cord are attached to the movable actuating cord (5) or one end of the cable is attached to said actuating cord (5) and the other end is attached to the structure of the device in the region close to the selvedge (7s) of the net that is attached to said structure.

4. The hail protection device according to claim 1, **characterized in that** the thinner cords (5a) for gathering (7b) the net (7) extend below or above the net (7) and transversely to the latter, wherein in each case one end of these cords is attached to the actuating cord (5) while the respective opposite end is attached to the unattached selvedge (7i) of the net and is guided through spaced-apart rings or hoops attached to the net (7).

5. The hail protection device according to claim 1, **characterized in that** the system of gathering the individual nets (7) into a bundle by means of an actuating cord (5) which is movably (5b, 5c) guided along the upper ends of the posts (1) of the planting rows (D, S) and which is equipped with thinner cords (5a) that loop around the respective nets (7) or are attached to the respective unattached selvedges (7i) can also be applied to devices with horizontally tensioned nets.

6. The hail protection device according to claim 1, **characterized in that** the nets (7) are provided substantially vertically on both longitudinal sides of the respective planting row, **in that** the net can be gathered into a bundle by in each case one actuating cord (5) with a row of loop-shaped thinner cords (5a) which encircle the respective net and which are guided through eyelets (2r) provided close to the ground, and **in that** the same net can be brought into a stretched-out vertical protecting position by an actuating tension cord (4) arranged substantially vertically thereabove with a row of thinner tension cords (4a).

## Revendications

1. Dispositif de protection anti-grêle pour plantations agricoles de type avec filets (7) dont une lisière longitudinale (7s) est fixée à un câble métallique tendu aux extrémités supérieures des différents poteaux supports (1) d'une rangée de plantations (D) et dont la deuxième lisière longitudinale (7i) des filets (7) est tendue au moyen d'une série de cordes de tension plus fines (4a) fixées (4x) à une unique corde de tension d'actionnement (4) mobile dans le sens longitudinal (5b, 5c) passant dans les extrémités supérieures des poteaux supports (1) de la rangée de plantations voisines (S), **caractérisé en ce que** lesdites cordes de tension plus fines (4a) sont déviées verticalement vers le bas par rapport au mouvement longitudinal (5b, 5c) des cordes de tension d'actionnement (4) au moyen d'oeillets (2t) ou de poulies prévus aux extrémités supérieures des différents poteaux support (1) et au moyen d'oeillets (2a) ou de poulies prévus sur un câble métallique de la structure support à l'extrémité supérieure des poteaux supports (1), pour ensuite être déviées au moyen d'oeillets (3) ou de poulies prévus plus bas sur les mêmes poteaux supports (1), ou au moyen d'oeillets (3a) ou de poulies positionnés plus bas au niveau correspondant, verticalement par rapport aux oeillets (2a) ou aux poulies susmentionnés fixés à un câble métallique tendu horizontalement (6), pour être fixées (4y) par l'une des extrémités à la lisière longitudinale (7i) des filets respectifs (7), et **en ce que** chacun des filets (7), dans la zone des extrémités supérieures des poteaux supports (1), peut être regroupé en un rouleau au moyen d'une corde d'actionnement (5), cette corde mobile (5b, 5c) passant par des oeillets (2r) ou sur des poulies maintenus (2) aux extrémités supérieures des poteaux supports (1) et présentant dans son prolongement longitudinal une série de cordes plus fines en forme de boucles (5a) qui entourent le filet (7).

2. Dispositif de protection anti-grêle pour plantations agricoles selon la revendication 1, **caractérisé en ce que**, par l'extension (7a) des filets (7) au moyen des cordes de tension plus fines (4a) et par le regroupement (7b) des filets au moyen des cordes plus fines (5a), une seule corde d'actionnement est prévue (4) à laquelle sont fixées les cordes de tension plus fines (5a) et les cordes plus fines (5a) permettant de regrouper le filet (7), les cordes de tension plus fines (4a) agissant sur les filets d'une rangée de plantations (D) tandis que les cordes plus fines (5a) destinées à regrouper le filet agissent sur le filet de la rangée de plantations voisine.

3. Dispositif de protection anti-grêle selon la revendication 1, **caractérisé en ce que** les cordes plus fines (5a) permettant de regrouper les filets (7) sont en forme de boucle et entourent le filet dans le sens transversal, les deux extrémités des cordes étant fixées à la corde d'actionnement mobile (5), ou une extrémité du câble étant fixée à ladite corde d'actionnement (5) et l'autre extrémité sur la structure du dispositif dans la zone proche de la lisière (7s) du filet, fixée à cette structure.

4. Dispositif de protection anti-grêle selon la revendication 1, **caractérisé en ce que** les cordes plus fines (5a) permettant de regrouper (7b) le filet (7) s'étendent en dessous et au-dessus du filet (7) transversalement à celui-ci, une extrémité de chacune de ces cordes étant fixée à la corde d'actionnement (5) tandis que l'autre extrémité opposée respective est fixée à la lisière non fixe (7i) du filet et passe par des boucles ou anneaux, espacés les uns des autres, fixés sur le filet (7.

5. Dispositif de protection anti-grêle selon la revendication 1, **caractérisé en ce que** le système de regroupement des différents filets (7) en un rouleau au moyen d'une corde d'actionnement (5) mobile (5b, 5c) passant dans les extrémités supérieures des poteaux supports (1) des rangées de plantations (D, S) équipée de cordes plus fines entourant les filets (7) respectifs ou fixées aux lisières (7i) non fixes, peut être également utilisé sur des dispositifs munis de filets tendus horizontalement.

6. Dispositif de protection anti-grêle selon la revendication 1, **caractérisé en ce que** les filets (7) sont prévus essentiellement à la verticale sur les côtés longitudinaux de chaque rangée de plantations, **en ce que** le filet peut être regroupé en un rouleau par une corde d'actionnement (5) correspondante munie d'une série de cordes plus fines (5a) en forme de boucles, entourant le filet en question et passant par des oeillets prévus près du sol (2r), et **en ce que** le même filet peut être tendu en position de protection verticale au moyen d'une corde de tension d'actionnement (4) munie d'une série de cordes de tension plus fines (4a), disposée au-dessus essentiellement à la verticale.
